# FASCICULE DE BREVET EUROPEEN

(11) **EP 4 587 284 B1**
(45) Date de publication et mention de la délivrance du brevet: **26.08.2026**
(21) Numéro de dépôt: 23750668.8
(22) Date de dépôt: 20.07.2023
(51) Int. Cl.: B60K 37/00, B60W 50/14

(54) **PROCÉDÉ ET DISPOSITIF DE FOURNITURE D'UNE INTERFACE HOMME MACHINE POUR UN ÉCRAN D'UN VÉHICULE**
VERFAHREN UND VORRICHTUNG ZUM BEREITSTELLEN EINER MENSCH-MASCHINE-SCHNITTSTELLE FÜR EINEN BILDSCHIRM EINES FAHRZEUGS
METHOD AND DEVICE FOR PROVIDING A HUMAN-MACHINE INTERFACE FOR A SCREEN OF A VEHICLE

(30) Priorité: 13.09.2022 FR 2209175
(43) Date de publication de la demande: 23.07.2025
(73) Titulaire: Stellantis Auto SAS, 78300 Poissy (FR)
(72) Inventeur: QUINIO, Pierre, 78000 VERSAILLES (FR); RAGOT, Yanis, 67990 OSTHOFFEN (FR); HAUS, Vincent, 90300 VALDOIE (FR); TAHHAN, Aref Antoine, 78170 LA CELLE ST CLOUD (FR); JUNGBLUT, Daniel, 65428 Rüsselsheim am Main (DE)
(74) Mandataire: ESIP
(86) Numéro de dépôt international: PCT/FR2023/051126
(87) Numéro de publication internationale: WO 2024/056950

(56) Documents cités:
- FR-A1- 3 052 887
- US-B1- 9 457 665

## Description

### Domaine technique

L'invention concerne la fourniture d'une interface homme machine pour un écran d'un véhicule.

### Arrière-plan technologique

Lors d'un défaut sur le véhicule, il existe plusieurs affichages d'alertes de l'utilisateur tels que des témoins et/ou des messages affichés dans l'écran du combiné du véhicule. Si l'utilisateur souhaite en savoir plus, il lui faut alors manuellement consulter et analyser le manuel (papier ou numérique) du véhicule afin de mieux comprendre l'origine du problème. La recherche manuelle dans le guide d'utilisation du véhicule pour identifier l'origine le problème n'est pas triviale.

En outre, l'état de la technique est connu des documents US 9457665 B1 et FR 3052887 A1.

### Résumé de l'invention

Un objet de la présente invention est de proposer une solution aux inconvénients précités et en particulier de faciliter l'accès à des informations du véhicule pour réduire le temps nécessaire pour identifier la cause d'une alerte véhicule.

A cet effet, l'invention a pour objet un procédé pour fournir une interface graphique pour un écran central d'un véhicule, ladite interface graphique comprenant un premier objet graphique affiché en permanence, lorsque l'écran est allumé, et affichant au moins la vitesse du véhicule et une pluralité de voyants, chacun des voyants étant relatif à un état d'une fonction du véhicule, ladite interface comportant en outre au moins un deuxième objet graphique affiché de façon éphémère, ledit procédé comportant des étapes de :
- en réponse à la réception d'un signal indiquant une défaillance d'une fonction du véhicule, modifier l'apparence du voyant relatif à la fonction défaillante, de façon à signaler la défaillance à un conducteur,
- en réponse à la détection d'un appui sur un des voyants, et à partir du signal de défaillance reçu, commander l'affichage d'un troisième objet graphique recouvrant le deuxième objet graphique, ledit troisième objet graphique comportant des informations relatives à la défaillance.

L'invention permet de réduire le nombre d'étapes nécessaires pour accéder à une information. En appuyant sur le symbole de l'alerte, l'utilisateur peut obtenir directement et sur le même écran une information sur l'alerte. En outre l'écran central est accessible à la fois par le conducteur et par un passager, la recherche d'information peut être effectuée par le passager, ce qui est particulièrement utile en phase de roulage du véhicule

Avantageusement, les fonctions pour lesquelles un symbole est affiché sont choisies parmi : un frein de parking électrique, un airbag passager, une assistance, fonction de correction électronique de trajectoire, un éclairage ou une signalisation, un système d'antiblocage des roues, une ceinture de sécurité, un diagnostic moteur, un désembuage de parebrise, une ceinture de sécurité, un niveau de carburant ou un mode économie, une pression d'huile.

Selon un mode de réalisation de l'invention, l'information relative au changement d'état comprend une page d'un manuel de bord du véhicule, la page étant identifiée à partir du signal indiquant le changement d'état.

Selon un autre mode de réalisation de l'invention, l'information relative au changement d'état comprend un numéro de page à retrouver dans un manuel papier.

Selon un autre mode de réalisation de l'invention, l'information relative au changement d'état comprend un lien redirigeant vers un tutoriel vidéo embarqué dans le véhicule.

Selon un autre mode de réalisation de l'invention, l'information relative au changement d'état comprend QR code ou lien internet redirigeant vers un document débarqué.

Avantageusement, le deuxième objet graphique est relatif à une application choisie parmi : une application de navigation, une application de lecture de contenus multimédia, une application de paramétrage de fonctions du véhicule.

L'invention concerne aussi un programme d'ordinateur comprenant des instructions qui, lorsque le programme est exécuté par un ordinateur, conduisent celui-ci à mettre en œuvre le procédé selon l'invention.

L'invention concerne aussi un dispositif pour fournir une interface graphique pour un écran central d'un véhicule, ledit dispositif comprenant une mémoire associée à au moins un processeur configuré pour la mise en œuvre des étapes du procédé selon l'invention.

L'invention concerne aussi un véhicule comportant un écran central et un dispositif selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un habitacle d'un véhicule, selon un exemple de réalisation particulier de la présente invention ;
[Fig. 2] illustre schématiquement un dispositif pour fournir une interface graphique pour un écran central d'un véhicule selon un exemple de réalisation particulier de la présente invention ;
[Fig. 3] illustre un exemple d'interface homme machine selon l'invention.
[Fig. 4] illustre schématiquement un procédé pour fournir une interface graphique pour un écran central d'un véhicule, selon un exemple de réalisation particulier de la présente invention.

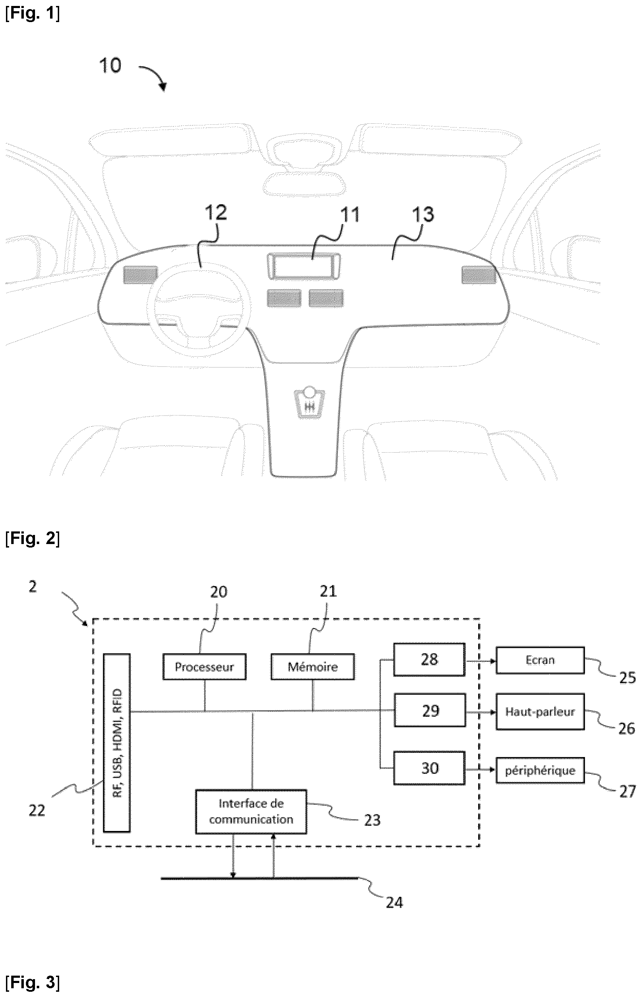

La figure 1 montre un habitacle de véhicule et en particulier une planche de bord. La planche de bord comporte, du côté conducteur, qui est dans l'exemple représenté sur le côté gauche du véhicule, un volant 12.

La planche de bord comporte, dans une partie centrale un écran 11. Il s'agit d'un écran tactile.

Le dispositif selon l'invention permet de fournir une interface graphique dans le véhicule. Il est en particulier configuré pour commander l'affichage sur l'écran 11 et, notamment pour commander l'affichage d'une pluralité d'objets graphiques d'affichage de données appelés « widgets » sur l'écran 11.

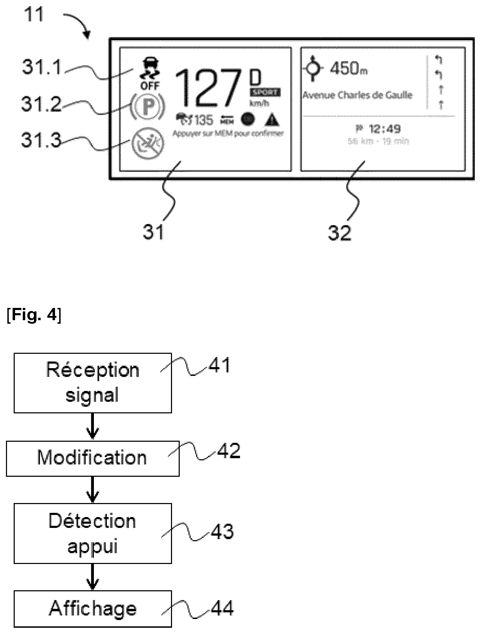

La figure 3 montre un exemple d'un affichage d'une pluralité d'objets graphiques 31, 32 sur l'écran 12.

Dans cet exemple, l'écran 11 affiche :
- Un premier objet graphique 31 affichant des informations telles qu'une vitesse de déplacement du véhicule, une valeur de vitesse limite pour le limiteur de vitesse, une limitation de vitesse détectée sur le segment de route parcouru par le véhicule, et
- Un deuxième objet graphique 32 affichant des informations de guidage.

Le premier objet graphique 31 affiché en permanence, lorsque l'écran 11 est allumé, et que le véhicule est dans une phase roulage (autrement dit le véhicule est en cours de déplacement). Le premier objet graphique 31 affichant au moins la vitesse du véhicule et une pluralité de voyants 31.1, 31.2, 31.3. Chacun des voyants 31.1, 31.2, 31.3 étant relatif à un état d'une fonction du véhicule. Dans cet exemple :
- un premier voyant 31.1 concerne l'état d'une fonction de correction électronique de trajectoire (un équipement de sécurité active d'antidérapage destiné à améliorer le contrôle de trajectoire du véhicule)
- un deuxième voyant 31.2 concerne l'état du frein à main électrique,
- un troisième voyant 31.3 concerne l'état d'un airbag passager.

Le deuxième objet graphique 32 est affiché de façon éphémère, autrement dit, il peut être remplacé par un autre objet graphique ou bien recouvert par une fenêtre dite pop up.

En référence à la figure 4, le procédé selon l'invention comporte les étapes suivantes.

Dans une première étape, le dispositif selon l'invention reçoit 41 un signal indiquant un changement d'état (par exemple une défaillance ou une indisponibilité) d'une fonction du véhicule.

Dans une deuxième étape, le dispositif commande la modification 42 l'apparence du voyant relatif à la fonction défaillante, de façon à signaler la défaillance à un conducteur. Cette modification d'apparence prend par exemple la forme d'un changement de couleur, d'un changement d'intensité de la luminosité, d'un changement de la transparence du voyant ou d'une combinaison de ces changements.

Dans une troisième étape, le dispositif détecte 43 un appui sur le voyant dont l'apparence a été modifié.

Dans une quatrième étape, en réponse à la détection 43, et à partir du signal de changement d'état reçu, le dispositif commande 44 l'affichage d'un troisième objet graphique recouvrant le deuxième objet graphique 32. Le troisième objet graphique comporte des informations relatives au changement d'état.

Selon un mode de réalisation de l'invention, l'information relative au changement d'état comprend une page d'un manuel de bord du véhicule, la page étant identifiée à partir du signal indiquant le changement d'état.

Selon un autre mode de réalisation de l'invention, l'information relative au changement d'état comprend un numéro de page à retrouver dans un manuel papier.

Selon un autre mode de réalisation de l'invention, l'information relative au changement d'état comprend un lien redirigeant vers un tutoriel vidéo embarqué dans le véhicule.

Selon un autre mode de réalisation de l'invention, l'information relative au changement d'état comprend QR code ou lien internet redirigeant vers un document débarqué.

[Fig. 2] illustre schématiquement un dispositif 2 de fourniture d'une interface graphique pour un écran central 11 d'un véhicule, selon un exemple de réalisation particulier et non limitatif de la présente invention. Le dispositif 2 correspond par exemple à un dispositif embarqué dans le véhicule, par exemple un calculateur.

Le dispositif 2 est par exemple configuré pour la mise en œuvre des étapes du procédé décrit en regard de la figure 4. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données, telles que par exemple une requête de démarrage, sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 24. L'interface de communication 23 correspond par exemple à un transmetteur configuré pour transmettre et recevoir des informations et/ou des données via le canal de communication 24 telle qu'un signal porteur indiquant si la rallonge est enroulée ou non. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 25, tactile ou non, un ou des haut-parleurs 26 et/ou d'autres périphériques 27 (capteur de contact) via respectivement des interfaces de sortie 28, 29 et 30. Selon une variante, l'un ou l'autre des dispositifs externes est intégré au dispositif 2.

## Revendications

1. Procédé pour fournir une interface graphique pour un écran central (11) d'un véhicule, ladite interface graphique comprenant un premier objet graphique (31) affiché en permanence, lorsque l'écran (11) est allumé, et affichant au moins la vitesse du véhicule et une pluralité de voyants (31.1, 31.2, 31.3), chacun des voyants (31.1, 31.2, 31.3) étant relatif à un état d'une fonction du véhicule, ladite interface comportant en outre au moins un deuxième objet graphique (32) affiché de façon éphémère, ledit procédé comportant des étapes de :
- en réponse à la réception (41) d'un signal indiquant une défaillance d'une fonction du véhicule, modifier (42) l'apparence du voyant relatif à la fonction défaillante, de façon à signaler la défaillance à un conducteur,
**caractérisé en ce qu'**il comporte également l'étape de :
- en réponse à la détection (43) d'un appui sur un des voyants (31.1, 31.2, 31.3), et à partir du signal de défaillance reçu, commander (44) l'affichage d'un troisième objet graphique recouvrant le deuxième objet graphique (32), ledit troisième objet graphique comportant des informations relatives à la défaillance.

2. Procédé pour fournir une interface graphique dans un véhicule selon la revendication 1, dans lequel les fonctions pour lesquelles un symbole est affiché sont choisies parmi : un frein de parking électrique, un airbag passager, une assistance, fonction de correction électronique de trajectoire, un éclairage ou une signalisation, un système d'antiblocage des roues, une ceinture de sécurité, un diagnostic moteur, un désembuage de parebrise, une ceinture de sécurité, un niveau de carburant ou un mode économie, une pression d'huile.

3. Procédé pour fournir une interface graphique dans un véhicule selon l'une des revendications précédentes, dans lequel l'information relative à la défaillance comprend une page d'un manuel de bord du véhicule, la page étant identifiée à partir du signal indiquant la défaillance.

4. Procédé pour fournir une interface graphique dans un véhicule selon l'une des revendications précédentes, dans lequel l'information relative à la défaillance comprend un numéro de page à retrouver dans un manuel papier.

5. Procédé pour fournir une interface graphique dans un véhicule selon l'une des revendications précédentes, dans lequel l'information relative à la défaillance comprend un lien redirigeant vers un tutoriel vidéo embarqué dans le véhicule.

6. Procédé pour fournir une interface graphique dans un véhicule selon l'une des revendications précédentes, dans lequel l'information relative à la défaillance comprend QR code ou lien internet redirigeant vers un document débarqué.

7. Procédé pour fournir une interface graphique dans un véhicule selon l'une des revendications précédentes, dans lequel le deuxième objet graphique (22) est relatif à une application choisie parmi : une application de navigation, une application de lecture de contenus multimédia, une application de paramétrage de fonctions du véhicule.

8. Programme d'ordinateur comprenant des instructions qui, lorsque le programme est exécuté par un ordinateur, conduisent celui-ci à mettre en œuvre le procédé selon l'une des revendications précédentes.

9. Dispositif pour fournir une interface graphique pour un écran central (11) d'un véhicule, ledit dispositif (2) comprenant une mémoire (21) associée à au moins un processeur (20) configuré pour la mise en œuvre des étapes du procédé selon l'une quelconque des revendications 1 à 7.

10. Véhicule comportant un écran central (11) et un dispositif (2) selon la revendication précédente.

## Patentansprüche

1. Verfahren zum Bereitstellen einer grafischen Schnittstelle für einen zentralen Bildschirm (11) eines Fahrzeugs, wobei die grafische Schnittstelle ein erstes grafisches Objekt (31) umfasst, das permanent angezeigt wird, wenn der Bildschirm (11) eingeschaltet ist, und das zumindest die Fahrzeuggeschwindigkeit und eine Vielzahl von Anzeigen (31.1, 31.2, 31.3) anzeigt, wobei jede der Anzeigen (31.1, 31.2, 31.3) sich auf einen Zustand einer Fahrzeugfunktion bezieht, wobei die Schnittstelle ferner zumindest ein zweites grafisches Objekt (32) umfasst, das kurzzeitig angezeigt wird, wobei das Verfahren die Schritte umfasst:
- Als Reaktion auf den Empfang (41) eines Signals, das auf einen Ausfall einer Funktion des Fahrzeugs hinweist, das Erscheinungsbild der Anzeige für die ausfallende Funktion so verändern (42), dass einem Fahrer der Ausfall angezeigt wird, **dadurch gekennzeichnet, dass** es auch den folgenden Schritt umfasst:
- Als Reaktion auf die Erkennung (43) einer Betätigung einer der LEDs (31.1, 31.2, 31.3) und aus dem empfangenen Fehlersignal die Anzeige eines dritten Grafikobjekts, das das zweite Grafikobjekt (32) abdeckt, zu steuern (44), wobei das dritte Grafikobjekt Informationen über den Fehler enthält.

2. Verfahren zum Bereitstellen einer grafischen Schnittstelle in einem Fahrzeug nach Anspruch 1, wobei die Funktionen, für die ein Symbol angezeigt wird, ausgewählt sind aus: einer elektrischen Parkbremse, einem Beifahrerairbag, einem Helfer, einer elektronischen Fahrbahnkorrekturfunktion, einer Beleuchtung oder einem Signal, einem Antiblockiersystem, einem Sicherheitsgurt, einer Motordiagnose, einer Windschutzscheibenentschärfung, einem Sicherheitsgurt, einem Kraftstoffstand oder einem Sparmodus, einem Öldruck.

3. Verfahren zum Bereitstellen einer grafischen Schnittstelle in einem Fahrzeug nach einem der vorhergehenden Ansprüche, wobei die Fehlerinformation eine Seite eines Fahrzeughandbuchs umfasst, wobei die Seite aus dem Fehlersignal identifiziert wird.

4. Verfahren zum Bereitstellen einer grafischen Schnittstelle in einem Fahrzeug nach einem der vorhergehenden Ansprüche, wobei die Fehlerinformation eine Seitenzahl umfasst, die in einem Papierhandbuch wiederzufinden ist.

5. Verfahren zum Bereitstellen einer grafischen Schnittstelle in einem Fahrzeug nach einem der vorhergehenden Ansprüche, wobei die Fehlerinformation einen Link zu einer in das Fahrzeug eingebauten Video-Anleitung umfasst.

6. Verfahren zum Bereitstellen einer grafischen Schnittstelle in einem Fahrzeug nach einem der vorhergehenden Ansprüche, wobei die Fehlerinformation QR-Code oder einen Internet-Link umfasst, der zu einem von Bord gekommenen Dokument umleitet.

7. Verfahren zum Bereitstellen einer grafischen Schnittstelle in einem Fahrzeug nach einem der vorhergehenden Ansprüche, wobei das zweite grafische Objekt (22) sich auf eine Anwendung bezieht, die ausgewählt ist aus: einer Navigationsanwendung, einer Anwendung zum Abspielen von Multimedia-Inhalten, einer Anwendung zum Einstellen von Fahrzeugfunktionen.

8. Computerprogramm, das Befehle umfasst, die, wenn das Programm von einem Computer ausgeführt wird, diesen veranlassen, das Verfahren nach einem der vorhergehenden Ansprüche auszuführen.

9. Vorrichtung zum Bereitstellen einer grafischen Schnittstelle für einen zentralen Bildschirm (11) eines Fahrzeugs, wobei die Vorrichtung (2) einen Speicher (21) umfasst, der mit mindestens einem Prozessor (20) verbunden ist, der zur Durchführung der Schritte des Verfahrens nach einem der Ansprüche 1 bis 7 konfiguriert ist.

10. Fahrzeug mit einer zentralen Abschirmung (11) und einer Vorrichtung (2) nach dem vorhergehenden Anspruch.

## Claims

1. Method for providing a chart interface for a centre screen (11) of a chart, said chart interface comprising a first permanently displayed object (31), when the screen (11) is switched on, and displaying at least the speed of the vehicle and a plurality of indicators (31.1, 31.2, 31.3), each of the indicators (31.1, 31.2, 31.3) relating to a status of a function of the vehicle, said interface further comprising at least one second ephemeral displayed chart object (32), said method comprising steps of:
- in response to the receipt (41) of a signal indicating a failure of a function of the vehicle, modify (42) the appearance of the indicator lamp relating to the failed function, so as to signal the failure to a driver, wherein it also includes the step of:
in response to the detection (43) of a press on one of the indicators (31. 1, 31. 2, 31. 3), and from the failure signal received, order (44) the display of a third chart object covering the second chart object (32), said third chart object comprising information relating to the failure.

2. Method for providing a chart interface in a vehicle according to claim 1, wherein the functions for which a symbol is displayed are selected: an electric parking brake, a passenger airbag, an assistance, an electronic trajectory correction function, a lighting or signalling, an anti-lock wheel system, a safety belt, an engine diagnosis, a windscreen demisting, a safety belt, a fuel level or an economy mode, an oil pressure.

3. Method for providing a chart interface in a vehicle according to claim 1, wherein the information relating to the failure comprises a page of an onboard manual of the vehicle, the page being identified from the signal indicating the failure.

4. Method for providing a chart interface in a vehicle according to claim 1, wherein the information relating to the failure comprises a page number to be found in a paper manual.

5. Method for providing a chart interface in a vehicle according to claim 1, wherein the information relating to the failure comprises a link redirecting to a video tutorial embedded in the vehicle.

6. Method for providing a chart interface in a vehicle according to claim 1, wherein the information relating to the failure comprises a QR code or an internet link redirecting to an unloaded document.

7. Method for providing a chart interface in a vehicle according to one of the previous claims, in which the second chart object (22) relates to a chosen application: a navigation application, an application for reading multimedia contents, an application for parameterizing vehicle functions.

8. Computer plan comprising instructions which, when the plan is executed by a computer, lead the latter to implement the method according to one of the previous claims.

9. Device for providing a chart interface for a centre screen (11) of a vehicle, said device (2) comprising a memory (21) associated with at least one processor (20) configured for implementing the steps of the method according to any one of claims 1 to 7.

10. Vehicle comprising a centre screen (11) and a device (2) according to the previous claim.
